# EUROPEAN PATENT APPLICATION

(11) **EP 3 363 860 A1**
(43) Date of publication of application: **22.08.2018**
(21) Application number: 16855512.6
(22) Date of filing: 14.10.2016
(51) Int. Cl.: C08L 29/04, C08K 5/29, C08K 5/3415, C08L 67/00, G02B 5/30, G03C 1/835

(54) **RESIN COMPOSITION AND OPTICAL FILM USING SAME**

(30) Priority: 16.10.2015 JP 2015205033; 23.02.2016 JP 2016032329
(71) Applicant: Adeka Corporation, Tokyo 116-0012 (JP)
(72) Inventor: HARA Kenji, Tokyo 116-0012 (JP); IRISAWA Masatomi, Tokyo 116-0012 (JP)
(74) Representative: Gill Jennings & Every LLP
(86) International application number: PCT/JP2016/080498
(87) International publication number: WO 2017/065259

(57) **Abstract**

Provided are: a resin composition which has excellent transparency and coating properties and exhibits low liquid crystal-contaminating properties; and an optical film using the same. The resin composition contains a polyvinyl alcohol and a polyester, and the polyester has a carboxyl group and/or a carboxyl group salt as a substituent(s). The polyvinyl alcohol is preferably a homopolymer or a copolymer that contains vinyl alcohol as an essential monomer, and it is preferred that the polyvinyl alcohol has an acetoacetate group.

## Description

### TECHNICAL FIELD

The present invention relates to a resin composition, and an optical film comprising the same. More particularly, the present invention relates to: a resin composition which has excellent transparency and coating properties and exhibits low liquid crystal-contaminating properties; and an optical film comprising the same.

### BACKGROUND ART

Water-soluble polymers such as polyvinyl alcohols are widely used in various applications including paints, inks, adhesives and optical films. For example, Patent Documents 1 and 2 propose composite films which have a layer containing a polyvinyl alcohol and a water-dispersible copolyester with sulfonyloxy residues, and Patent Document 3 proposes a coated film product having an aqueous tie layer containing a polyvinyl alcohol and a water dispersible polyester.

### RELATED ART DOCUMENTS

### PATENT DOCUMENTS

Patent Document 1: Japanese Unexamined Patent Application Publication (Translation of PCT Application) No. 2001-510110
Patent Document 2: Japanese Patent No. 4204188
Patent Document 3: Japanese Unexamined Patent Application Publication (Translation of PCT Application) No. 2004-529750

### SUMMARY OF THE INVENTION

### PROBLEMS TO BE SOLVED BY THE INVENTION

For the use of a polyvinyl alcohol-containing resin composition in an optical film for a flat panel display, a coating material of an optical film, a sealing agent for liquid-crystal dropping method or the like, the polyvinyl alcohol-containing resin composition is required to have low liquid crystal-contaminating properties in addition to high transparency and coating properties. However, in polyvinyl alcohol-containing resin compositions, such physical properties are not necessarily sufficient, and a further improvement is thus demanded at present.

Therefore, an object of the present invention is to provide a resin composition which has excellent transparency and coating properties and exhibits low liquid crystal-contaminating properties, and an optical film comprising the same.

### MEANS FOR SOLVING THE PROBLEMS

The present inventors intensively studied to solve the above-described problems and consequently discovered that a resin composition which comprises a polyvinyl alcohol and a polyester having a prescribed structure has excellent transparency and coating properties and exhibits low liquid crystal-contaminating properties and thus can be suitably used in optical films for flat panel displays, coating materials of optical films, sealing agents for liquid-crystal dropping method and the like, thereby completing the present invention.

That is, the resin composition of the present invention is a resin composition comprising a polyvinyl alcohol and a polyester, which resin composition is characterized in that the polyester comprises a carboxyl group and/or a carboxyl group salt as a substituent(s).

In the resin composition of the present invention, the polyvinyl alcohol may be a homopolymer or a copolymer that contains a vinyl alcohol as an essential monomer. In the resin composition of the present invention, it is preferred that the polyvinyl alcohol comprise an acetoacetate group. In the resin composition of the present invention, it is also preferred that the polyvinyl alcohol has a saponification degree of 85 or higher. Further, in the resin composition of the present invention, the content of the polyester is preferably 0.5 to 50% by mass in solid content.

It is preferred that the resin composition of the present invention further comprise a cross-linking agent. Moreover, in the resin composition of the present invention, it is preferred that the cross-linking agent be an oxazoline compound or a carbodiimide compound.

An optical film of the present invention is characterized by comprising the resin composition of the present invention.

### EFFECTS OF THE INVENTION

According to the present invention, a resin composition which has excellent transparency and coating properties and exhibits low liquid crystal-contaminating properties, and an optical film comprising the same can be provided.

### MODE FOR CARRYING OUT THE INVENTION

The resin composition and the optical film according to the present invention will now be described in detail.

The resin composition of the present invention is a resin composition comprising a polyvinyl alcohol and a polyester, and the polyester comprises a carboxyl group and/or a carboxyl group salt as a substituent(s). The polyvinyl alcohol and the polyester according to the resin composition of the present invention will now be described in detail.

### <Polyvinyl Alcohol>

In the resin composition of the present invention, the polyvinyl alcohol may be a homopolymer or a copolymer that contains a vinyl alcohol as an essential monomer. Examples of such a polyvinyl alcohol include polyvinyl alcohols, partially saponified polyvinyl alcohols and completely saponified polyvinyl alcohols, obtained by polymerization of vinyl alcohol and generally referred to as "povals"; modified polyvinyl alcohols, such as carboxyl group-modified polyvinyl alcohols, acetoacetate group-modified polyvinyl alcohols, methylol group-modified polyvinyl alcohols, amino group-modified polyvinyl alcohols, ester group-modified polyvinyl alcohols, carboxyl group-modified polyvinyl alcohols, amide group-modified polyvinyl alcohols, styrylpyridinium group-modified polyvinyl alcohols, quaternary ammonium salt group-modified polyvinyl alcohols, allyl group-modified polyvinyl alcohols, oxypropylene group-modified polyvinyl alcohols, urethane group-modified polyvinyl alcohols, ether group-modified polyvinyl alcohols, phosphate group-modified polyvinyl alcohols, acetal group-modified polyvinyl alcohols, butyral group-modified polyvinyl alcohols, silanol group-modified polyvinyl alcohols, and polyvinyl alcohols having a 1,2-diol structure in a side chain; and saponification products of copolymers composed of vinyl acetate and a copolymerizable monomer. Thereamong, an acetoacetate group-modified polyvinyl alcohol can be preferably used since it is cross-linked by a heat treatment.

Examples of the copolymerizable monomer include unsaturated carboxylic acids, such as maleic acid, maleic anhydride, fumaric acid, crotonic acid, itaconic acid, acrylic acid and methacrylic acid, and esters of these unsaturated carboxylic acids; α-olefins, such as ethylene and propylene; allyl sulfonic acid; methallyl sulfonic acid; sodium allylsulfonate; sodium methallylsulfonate; sodium sulfonate; sodium sulfonate monoalkyl maleate; sodium disulfonate alkyl maleate; *N*-methylolacrylamide; acrylamide alkylsulfonate alkali salts; *N*-vinylpyrrolidone; and *N*-vinylpyrrolidone derivatives.

In the resin composition of the present invention, these polyvinyl alcohols may be used individually, or in combination of two or more thereof. A polyvinyl alcohol which has a polystyrene-equivalent weight-average molecular weight (Mw), which is determined by gel permeation chromatography (GPC), of 10,000 to 200,000 and a saponification degree (hydrolysis rate) of 85 or higher, particularly 85 to 100, is preferred since it improves the water resistance and the durability of the resulting film.

As the polyvinyl alcohol, a commercially available product may be used as well, and examples thereof include GOHSENOL™ NL-05, NH-18, NH-20, NH-26, NM-14, AH-17, A-300, GM-14L, GL-05, KL-05, GH-23, and KH-17 (manufactured by The Nippon Synthetic Chemical Industry Co., Ltd.); GOHSENX™ Z-100, Z-200, Z-300, Z-410, and T-330H (manufactured by The Nippon Synthetic Chemical Industry Co., Ltd.); NICHIGO G-polymer™ OKS-1081 and OKS-1083 (manufactured by The Nippon Synthetic Chemical Industry Co., Ltd.); VF-17 and V-S20 (manufactured by Japan Vam & Poval Co., Ltd.); KURARAY POVAL PVA-103, PVA-105, PVA-117, PVA-205, PVA-217, PVA-405, and PVA-420 (manufactured by Kuraray Co., Ltd.); and DENKA POVAL® K-05, K-17C, K-24E, H-12, H-17, B-05, and B-17 (manufactured by Denka Co., Ltd.).

### <Polyester>

The polyester according to the resin composition of the present invention has at least either of a carboxyl group and a carboxyl group salt as a substituent. Such a polyester is dissolved in water, emulsified by dispersion in water, or dissolved in an alkaline water. In the polyester according to the resin composition of the present invention, the carboxyl group salt is preferably an alkali metal salt, an ammonium salt, or an amine salt since such a salt enables to favorably attain the effects of the present invention.

The carboxyl group in the polyester is preferably one which yields a polyester having an acid value of 15 to 250 mg KOH/g. When the acid value is less than 15 mg KOH/g, it may be difficult to disperse the polyester in water, and the uniformity and the film-forming properties may be deteriorated. Meanwhile, when the acid value is higher than 250 mg KOH/g, the water resistance may be poor. The higher the acid value, the less scattering in the visible region and the finer becomes the dispersed particles, so that the affinity for water is improved and good compatibility with the polyvinyl alcohol is thus attained, which is preferred.

Among polyesters according to the resin composition of the present invention, as a polyester having a carboxyl group salt as a substituent, for example, one which is obtained by polycondensation of a tri- or higher-functional polycarboxylic acid and a compound having one or two hydroxyl groups is preferred.

Examples of the tri- or higher-functional polycarboxylic acid include trimellitic acid, trimellitic anhydride, pyromellitic acid, pyromellitic anhydride, 4-methylcyclohexene-1,2,3-tricarboxylic anhydride, and trimesic acid. These tri- or higher-functional polycarboxylic acids may be used individually, or in combination of two or more thereof.

Examples of the compound having one or two hydroxyl groups include aliphatic polyols, polyhydroxy aromatic compounds, polyether diols, polyester diols, polyester polycarbonate diols, polycarbonate diols, polyolefin diols, and those in which a hydroxyl group on either terminal of the above-described compounds is alkoxylated with an alkyl group having 1 to 25 carbon atoms. These compounds may be used individually, or in combination of two or more thereof.

Examples of the above-described aliphatic polyols include aliphatic diols, such as ethylene glycol, 1,2-propanediol, 1,3-propanediol, 2-methyl-1,3-propanediol, 2-butyl-2-ethyl-1,3-propanediol, 1,4-butanediol, neopentyl glycol, 3-methyl-2,4-pentanediol, 2,4-pentanediol, 1,5-pentanediol, 3-methyl-1,5-pentanediol, 2-methyl-2,4-pentanediol, 2,4-diethyl-1,5-pentanediol, 1,6-hexanediol, 1,7-heptanediol, 3,5-heptanediol, 1,8-octanediol, 2-methyl-1,8-octanediol, 1,9-nonanediol, and 1,10-decanediol; alicyclic diols, such as cyclohexane dimethanol, cyclohexanediol, hydrogenated bisphenol A, and hydrogenated bisphenol F; and trihydric or higher polyols, such as trimethylolethane, trimethylol propane, hexitols, pentitols, glycerol, polyglycerol, pentaerythritol, dipentaerythritol, and tetramethylolpropane.

Examples of the above-described polyether diols include ethylene oxide adducts, such as diethylene glycol and triethylene glycol; propylene oxide adducts, such as dipropylene glycol and tripropylene glycol; ethylene oxide and/or propylene oxide adducts of low-molecular-weight polyols; and polytetramethylene glycols.

Examples of the above-described polyester diols include those obtained by a direct esterification reaction and/or a transesterification reaction of a low-molecular-weight diol with a dicarboxylic acid or its ester-forming derivative (e.g., ester, anhydride, or halide) and/or a lactone or a hydroxycarboxylic acid obtained by ring-opening hydrolysis of the lactone, whose amount is less than the stoichiometric amount of the low-molecular-weight diol.

Examples of the dicarboxylic acid include aliphatic dicarboxylic acids, such as oxalic acid, malonic acid, succinic acid, glutaric acid, adipic acid, azelaic acid, pimelic acid, suberic acid, azelaic acid, sebacic acid, fumaric acid, maleic acid, dodecanedioic acid, 2-methyl succinic acid, 2-methyl adipic acid, 3-methyl adipic acid, 3-methyl pentanedioic acid, 2-methyl octanedioic acid, 3,8-dimethyl decanedioic acid, 3,7-dimethyl decanedioic acid, hydrogenated dimer acid, and dimer acid; aromatic dicarboxylic acids, such as phthalic acid, terephthalic acid, isophthalic acid, dimethyl malonic acid, glutaric acid, trimethyl adipic acid, 2,2-dimethyl glutaric acid, itaconic acid, 1,3-cyclopentane dicarboxylic acid, 1,2-cyclohexane dicarboxylic acid, 1,4-cyclohexane dicarboxylic acid, 2,5-norbornane dicarboxylic acid, 1,4-naphthalic acid, diphenic acid, 4,4'-oxybenzoic acid, diglycolic acid, thiodipropionic acid, hexahydroterephthalic acid, naphthalene-2,5-dicarboxylic acid, naphthalene-2,6-dicarboxylic acid, and pyromellitic monoanhydride; and alicyclic dicarboxylic acids, such as cyclohexane dicarboxylic acid.

Examples of the above-described polycarbonate diols include poly(1,6-hexylene)carbonate and poly(3-methyl-1,5-pentylene)carbonate, and examples of the above-described polyolefin diols include polybutadiene glycol, hydrogenated-type polybutadiene glycol, and hydrogenated-type polyisoprene glycol. Among the compounds having one or two hydroxyl groups in the same molecule, polyether diols and/or polyester diols are particularly preferred. The molecular weight of the compounds having one or two hydroxyl groups in the same molecule is 300 to 3,000, preferably 500 to 2,000.

Examples of the above-described polyhydroxy aromatic compounds include 4,4-biphenol, 1,1-bis(4-hydroxyphenyl)ethane, 2,2-bis(4-hydroxyphenyl)propane, 2,2-bis(4-hydroxyphenyl)butane, bis(4-hydroxyphenyl)ether, bis(4-hydroxyphenyl)sulfide, bis(4-hydroxyphenyl)sulfone, 4,4'-(1-α-methylbenzylidene)bisphenol, 4,4'-(1-α-ethylbenzylidene)bisphenol, 1,1-bis(4-hydroxyphenyl)cyclohexane, 9,9-bis(4-hydroxyphenyl)fluorene, α,α'-bis(4-hydroxyphenyl)-1,4-diisopropylbenzene, hydrogenated bisphenol compound, resorcinol, hydroquinone, 2,5-di-tert-butylhydroquinone, 1,4-dihydroxynaphthalene, 1,2,4-trihydroxybenzene, 2-[bis(4-hydroxyphenyl)methyl]benzyl alcohol, salicylic acid, xylylene glycol, and bis-hydroxyethoxybenzene.

Examples of the above-described polyester polycarbonate diols include reaction products of an alkylene carbonate and a polyester glycol such as a polycaprolactone polyol, and reaction products obtained by a reaction between an organic dicarboxylic acid and a reaction product of ethylene carbonate and glycol.

Examples of the above-described polyolefin diols include polybutadiene glycol, hydrogenated-type polybutadiene glycol, and hydrogenated-type polyisoprene glycol.

The polyester according to the resin composition of the present invention can be obtained by a method of graft-polymerizing a polyester with a polymerizable unsaturated carboxylic acid, or a method of performing chain extension by selective monoesterification reaction between glycol or a polyester glycol having a hydroxyl group at a terminal and a tetracarboxylic dianhydride as described in Japanese Unexamined Patent Application Publication No. S62-240318.

In the resin composition of the present invention, as the polyester, a commercially available product can be used as well, and examples thereof include NICHIGO POLYESTER WR-961 and WR-1031 (manufactured by The Nippon Synthetic Chemical Industry Co., Ltd.); PESRESIN A-680, A-690, A-210, A-230, and A-695GE (manufactured by Takamatsu Oil & Fat Co., Ltd.); PLAS COAT Z-730 and Z-760 (manufactured by Goo Chemical Co., Ltd.); and VYLONAL® MD-1100, MD-1200, MD-1245, MD-1335, MD-1480, MD-1500, MD-1930, MD-1985, and MD-2000 (manufactured by TOYOBO Co., Ltd.).

In the resin composition of the present invention, the polystyrene-equivalent weight-average molecular weight (Mw) of the polyester, which is determined by gel permeation chromatography (GPC), is from the standpoint of water resistance, preferably 500 to 30,000, more preferably 1,000 to 10,000.

In the resin composition of the present invention, the blending ratio of the polyvinyl alcohol and the polyester is, in terms of solid content, preferably 99.5:0.5 to 50:50 from the standpoint of the compatibility, more preferably 95:5 to 60:40 from the standpoints of the transparency and water resistance of the resulting coating film.

In the resin composition of the present invention, a cross-linking agent can further be added and allowed to react with a carboxylic acid salt so as to improve the water resistance and the heat resistance. Examples of the cross-linking agent include oxazoline compounds, carbodiimide compounds, epoxy compounds, oxetane compounds, vinyl ether compounds, polyamines, polyols, polyphenols, polyfunctional thiols, dicyandiamide derivatives, hydrazine compounds, polyhydrazide compounds (dihydrazide, trihydrazide), aldehydes, methylol compounds, activated vinyl compounds, polyisocyanate compounds, alkylene carbonate compounds of phenolic compounds, polyvalent metal salts, silane-coupling agents, organic titanium, and organic zirconium, among which oxazoline compounds and carbodiimide compounds are preferred since these compounds react at a heat-drying temperature of 100 to 120°C.

In the resin composition of the present invention, as the cross-linking agent, a commercially available product can be used as well, and examples thereof include EPOCROS® WS-300, WS-500, and WS-700 (manufactured by Nippon Shokubai Co., Ltd.); CARBODILITE® V-02, V-02-L2, SV-02, V-04, V-10, SW-12G, E-02, E-03A, and E-05 (manufactured by Nisshinbo Chemical Inc.); SR-4GL and SR-6GL (manufactured by Sakamoto Yakuhin Kogyo Co., Ltd.); and ORGATIX ZC-126 and TC-315 (manufactured by Matsumoto Fine Chemical Co., Ltd.).

The resin composition of the present invention can be obtained by mixing an aqueous solution or aqueous dispersion of the polyvinyl alcohol with an aqueous solution, aqueous dispersion or aqueous-dispersible emulsion of the polyester, and a coupling agent, a surfactant and the like may also be added as required.

Examples of the coupling agent that can be used include alkyl functional alkoxysilanes, such as dimethyldimethoxysilane, dimethyldiethoxysilane, methylethyldimethoxysilane, methylethyldiethoxysilane, methyltrimethoxysilane, methyltriethoxysilane, ethyltrimethoxysilane, and ethyltrimethoxysilane; alkenyl functional alkoxysilanes, such as vinyltrichlorosilane, vinyltrimethoxysilane, vinyltriethoxysilane, and allyltrimethoxysilane; epoxy functional alkoxysilanes, such as 3-methacryloxypropyltriethoxysilane, 3-methacryloxypropyltrimethoxysilane, 3-methacryloxypropylmethyldiethoxysilane, 3-methacryloxypropylmethyldimethoxysilane, 2-methacryloxypropyltrimethoxysilane, *γ*-glycidoxypropyltrimethoxysilane, *γ*-glycidoxypropylmethyldiethoxysilane, and *β*-(3,4-epoxycyclohexyl)ethyltrimethoxysilane; amino functional alkoxysilanes, such as *N*-*β*(aminoethyl)-*γ*-aminopropyltrimethoxysilane, *γ*-aminopropyltriethoxysilane, and *N*-phenyl-*γ*-aminopropyltrimethoxysilane; mercapto functional alkoxysilanes, such as *γ*-mercaptopropyltrimethoxysilane; titanium alkoxides, such as titanium tetraisopropoxide and titanium tetra-n-butoxide; titanium chelates, such as titanium dioctyloxy-bis(octylene glycolate) and titanium diisopropoxy-bis(ethylacetoacetate); zirconium chelates, such as zirconium tetraacetyl acetonate and zirconium tributoxymonoacetylacetonate; zirconium acylates, such as zirconium tributoxy monostearate; and isocyanate silanes, such as methyltriisocyanate silane.

Examples of the surfactant that can be used include fluorine surfactants, such as perfluoroalkyl phosphates and perfluoroalkyl carboxylates; anionic surfactants, such as higher fatty acid alkali salts, alkyl sulfonates, and alkyl sulfates; cationic surfactants, such as higher amine halogen acid salts and quaternary ammonium salts; nonionic surfactants, such as polyethylene glycol alkyl ethers, polyethylene glycol fatty acid esters, sorbitan fatty acid esters, and fatty acid monoglycerides; amphoteric surfactants; and silicone-based surfactants, and these surfactants may be used in combination as well.

The resin composition of the present invention can be used as a photosetting/thermosetting resin composition by further adding thereto a radical polymerizable compound, a polymerization initiator and, as required, a sensitizer. The resulting photo setting/thermosetting resin composition is expected to have high water resistance and high heat resistance.

The radical polymerizable compound is not particularly restricted, and any conventionally used radical polymerizable compound can be employed. Examples thereof include unsaturated aliphatic hydrocarbons; unsaturated polybasic acids; esters of an unsaturated monobasic acid and a polyhydric alcohol or a polyhydric phenol; unsaturated polybasic acid anhydrides; amides of an unsaturated monobasic acid and a polyvalent amine; unsaturated aldehydes; unsaturated aromatic compounds; unsaturated ketones; vinyl ethers; unsaturated imides; indenes; aliphatic conjugated dienes; macromonomers having a mono(meth)acryloyl group at a terminal of a polymer molecular chain; vinyl chloride; vinylidene chloride; divinyl succinate; diallyl phthalate; triallyl phosphate; triallyl isocyanurate; vinyl thioether; vinylimidazole; vinyloxazoline; vinylcarbazole; vinylpyrrolidone; vinylpyridine; vinylurethane compounds formed by a hydroxyl group-containing vinyl monomer and a polyisocyanate compound; vinylepoxy compounds formed by a hydroxyl group-containing vinyl monomer and an epoxy compound; reaction products of a hydroxyl group-containing polyfunctional acrylate and a polyfunctional isocyanate; and polyfunctional acrylates having an acid value, which are reaction products of a hydroxyl group-containing polyfunctional acrylate and a dibasic acid anhydride. These polymerizable compounds may be used individually, or in combination of two or more thereof. When two or more of these polymerizable compounds are used in combination, they may be copolymerized in advance and used as a copolymer.

The polymerization initiator may be any compound that is capable of initiating radical polymerization upon irradiation with light or heat, and examples thereof include photo radical polymerization initiators, such as ketone-based compounds (e.g., acetophenone-based compounds, benzyl-based compounds, benzophenone-based compounds, and thioxanthone-based compound) and oxime-based compounds; azo-based initiators, such as 2,2'-azobisisobutyronitrile, 2,2'-azobis(methylisobutyrate), 2,2'-azobis-2,4-dimethylvaleronitrile, and 1,1'-azobis(1-acetoxy-1-phenylethane); peroxide-based initiators, such as benzoyl peroxide, di-t-butylbenzoyl peroxide, t-butyl peroxypivalate, and di(4-t-butylcyclohexyl)peroxy dicarbonate; and thermal radical polymerization initiators, such as persulfates (e.g., ammonium persulfate, sodium persulfate, and potassium persulfate). These polymerization initiators may be used individually, or in combination of two or more thereof.

As the sensitizer, a compound capable of increasing a wavelength range of applicable light when curing is performed by irradiation with light can be used, and examples thereof include benzophenones, such as benzophenone, 3-hydroxybenzophenone, 4-hydroxybenzophenone, 4,4-dihydroxybenzophenone, 2-methylbenzophenone, 3-methylbenzophenone, 4-methylbenzophenone, 2,5-dimethylbenzophenone, 3,4-dimethylbenzophenone, 4-methoxybenzophenone, 4,4-dimethoxybenzophenone, 3,3-dimethyl-4-methoxybenzophenone, and 4-phenylbenzophenone; acetophenones, such as acetophenone, 4-methoxyacetophenone, 2,4-dimethoxyacetophenone, 2,5-dimethoxyacetophenone, 2,6-dimethoxyacetophenone, 4,4-dimethoxyacetophenone, 4-ethoxyacetophenone, diethoxyacetophenone, 2,2-diethoxyacetophenone, 2-ethoxy-2-phenylacetophenone, and 4-phenylacetophenone; anthraquinones, such as anthraquinone, hydroxyanthraquinone, 1-nitroanthraquinone, aminoanthraquinone, 2-chloroanthraquinone, 2-methylanthraquinone, 2-ethylanthraquinone, anthraquinone sulfonic acid, 1,2-benzanthraquinone, and 1,4-hydroxyanthraquinone (quinizarin); anthracenes, such as anthracene, 1,2-benzanthracene, 9-cyanoanthracene, 9,10-dicyanoanthracene, 2-ethyl-9,10-dimethoxyanthracene, and 9,10-bis(phenylethyl)anthracene; quinones, such as 2,3-dichloro-6-dicyano-*p*-benzoquinone, 2,3-dimethoxy-5-methyl-1,4-benzoquinone, methoxybenzoquinone, 2,5-dichloro-*p*-benzoquinone, 2,6-dimethyl-1,4-benzoquinone, 9,10-phenanthrenequinone, camphorquinone, 2,3-dichloro-1,4-naphthoquinone, and xanthone; thioxanes, such as thioxanthone, 2-methylthioxanthone, 2,4-dimethylthioxanthone, isopropylthioxanthone, 2,4-diethylthioxanthone, and 2,4-isopropylthioxanthone; cycloheptanes, such as dibenzosuberone, dibenzosuberenone, dibenzosuberenol, and dibenzosuberane; aromatic compounds, such as 2-methoxynaphthalene, benzoin isopropyl ether, 4-benzoyl diphenyl, o-benzoyl benzoate, methyl o-benzoylbenzoate, 4-benzoyl-4-methyl-diphenyl sulfide, benzyl, and benzoin methyl ether; and coumarin-based, tiazine-based, azine-based, acridine-based, and xanthene-based compounds that are dye-based sensitizing substances.

The resin composition of the present invention can be coated on a support substrate made of glass, metal, paper, plastic or the like using a known means, such as a spin coater, a bar coater, a roll coater, a curtain coater, various printing or immersion means. Further, after once coating the resin composition of the present invention on a support substrate such as a film, the resultant can be transferred onto another support substrate, and the method thereof is not restricted.

Moreover, in the resin composition of the present invention, as long as the effects of the present invention are not impaired, a variety of resin additives and the like, such as an acid generator, a base initiator, an inorganic filler, an organic filler, a coloring agent (e.g., a pigment or a dye), an anti-foaming agent, a thickening agent, a leveling agent, a thixotropic agent, a carbon compound, metal fine particles, a metal oxide, a flame retardant, a plasticizer, a light stabilizer, a heat stabilizer, an age inhibitor, elastomer particles, a chain transfer agent, a polymerization inhibitor, an ultraviolet absorber, an antioxidant, an antistatic agent, a mold-release agent, a flow modifier, an adhesion-promoting agent, and an unsaturated monomer, may be further incorporated as required.

Specific examples of the use of the resin composition of the present invention include optical materials represented by eyeglasses and imaging lenses; paints; coating agents; lining agents; inks; resists; liquid resists; adhesives; sealing agents for liquid-crystal dropping method; printing boards; insulating varnishes; insulating sheets; laminated plates; printed circuit boards; sealants for semiconductor devices, LED packages, liquid crystal inlets, organic ELs, optical elements, electrical insulating materials, electronic components, separator membranes and the like; molding materials; putties; glass fiber impregnants; fillers; passivation films for semiconductors, solar cells and the like; interlayer insulating films; protective films; prism lens sheets used in backlights of liquid crystal displays; Fresnel lens sheets used in screens of projection televisions and the like; lens parts of lens sheets such as lenticular lens sheets, and backlights and the like using such sheets; protective films and spacers of liquid crystal color filters; DNA separation chips; micro-reactors; nano-biodevices; recording materials for hard disks; solid-state image sensing devices; solar cell panels; light-emitting diodes; organic light-emitting devices; luminescent films; fluorescent films; MEMS elements; actuators; holograms; plasmon devices; polarizing plates; polarizing films; optical lenses such as microlenses; optical elements; optical connectors; optical waveguides; and casting agents for optical modeling, and examples of a substrate to which the resin composition of the present invention can be applied as a coating agent include products made of a metal, a wood material, a rubber, a plastic, a glass, a ceramic or the like.

Next, the optical film of the present invention will be described. The optical film of the present invention is composed of the resin composition of the present invention. The optical film of the present invention may be produced by molding the resin composition of the present invention into a film or a sheet by a commonly used method, with or without subsequent stretching (or an orientation treatment) of the thus obtained film or sheet. For the film molding, a melt molding method (melt film-forming method) such as extrusion molding or blow molding, or a cast molding method (a cast film-forming method or a solution casting method) may be utilized.

In cases where the optical film of the present invention is produced by coating a transparent support with the resin composition of the present invention, examples of the material of the transparent support include inorganic materials such as glass; cellulose esters, such as diacetyl cellulose, triacetyl cellulose (TAC), propionyl cellulose, butyryl cellulose, acetylpropionyl cellulose, and nitrocellulose; polyamides; polycarbonates; polyesters, such as polyethylene terephthalate, polyethylene naphthalate, polybutylene terephthalate, poly-1,4-cyclohexane dimethylene terephthalate, polyethylene-1,2-diphenoxyethane-4,4'-dicarboxylate, and polybutylene terephthalate; polystyrenes; polyolefins, such as polyethylenes, polypropylenes, and polymethylpentenes; acrylic resins such as polymethyl methacrylate; polycarbonates; polysulfones; polyether sulfones; polyether ketones; polyether imides; and polymeric materials, such as polyoxyethylenes and norbornene resins. The transmittance of the transparent support is preferably 80% or higher, more preferably 86% or higher. The haze is preferably 2% or less, more preferably 1*%* or less. The refractive index is preferably 1.45 to 1.70.

When irradiating a light to a coating film obtained by applying the resin composition of the present invention, the irradiation conditions, such as the wavelength and intensity of the light to be irradiated and the irradiation time, may be adjusted as appropriate in accordance with the activity of a photoinitiator, the activity of a photopolymerizable resin to be used and the like; however, as for the wavelength of the light, usually, in order to allow the light to sufficiently penetrate into the inside, the light has a wavelength peak of preferably 350 to 400 nm, more preferably 360 to 380 nm. Further, the intensity of the light is preferably 10 to 300 mW/cm², more preferably 25 to 100 mW/cm², and the irradiation time is preferably 5 to 500 seconds, more preferably 10 to 300 seconds.

In cases where a coating film obtained by applying the resin composition of the present invention is heat-cured, the heating conditions, such as the heating temperature and the heating time, may be adjusted as appropriate in accordance with the activities and the like of a radical polymerizable compound and a polymerization initiator; however, the heating temperature is preferably 80 to 200°C, and the heating time is preferably 30 seconds to 60 minutes.

The shape of the optical film of the present invention is not particularly restricted; however, usually, the optical film of the present invention is a film that has an optical film on a transparent support and is utilized in optical applications, and examples thereof include various functional films, such as polarizing plate protective films, retardation films and viewing angle-expanding films, which are used in liquid crystal displays and the like, and anti-reflection films and low-reflectance films that are used in plasma displays; and various functional films that are used in organic EL displays.

The optical film of the present invention can be used as optical recording layers of write-once optical disks (e.g., CD±R, DVD±R, and next-generation high-density disks) in which the optical film is applied to a support; various lenses; optical filters for image display devices; various filters represented by color filters and color conversion filters; and protective sealing films of organic EL light-emitting devices, inorganic EL light-emitting devices, electronic paper displays and the like.

### EXAMPLES

The present invention will now be described in more detail by way of examples thereof; however, the present invention is not restricted thereto. It is noted here that, in the below-described Examples and Comparative Examples, "part(s)" means "part(s) by mass".

### [Examples 1 to 36 and Comparative Examples 1 to 14]

### <Preparation of Aqueous Polyvinyl Alcohol Solutions>

First, to 900.0 g of ion-exchanged water being stirred at room temperature, 100.0 g of each of the below-described polyvinyl alcohols A-1 to A-7 was slowly added. The resulting solution was stirred at room temperature for 10 minutes and subsequently heated until the inner temperature was increased to 85°C to 90°C, after which the stirring was continued at this temperature for 1 hour. After confirming that the polyvinyl alcohol was dissolved, this aqueous polyvinyl alcohol solution was cooled to room temperature. Thereafter, the thus prepared aqueous polyvinyl alcohol solution was filtered through a 1-µm filter. It is noted here that, in Tables 1 to 8 below, the blended amounts of PV-1 to PV-7, B-1 to B-6, B'-1 and B'-3 mean the ratios (% by mass) in terms of solid content, while the blended amount of B'-2 means the whole amount thereof since it was in a liquid form.
A-1: GOHSENOL™ NL-05 (saponification degree: 99), manufactured by The Nippon Synthetic Chemical Industry Co., Ltd.
A-2: GOHSENOL™ GL-05 (saponification degree: 87), manufactured by The Nippon Synthetic Chemical Industry Co., Ltd.
A-3: NICHIGO G-POLYMER OKS-1083 (saponification degree: 99), manufactured by The Nippon Synthetic Chemical Industry Co., Ltd.
A-4: GOHSENX™ Z-300 (saponification degree: 98), manufactured by The Nippon Synthetic Chemical Industry Co., Ltd.
A-5: GOHSENX™ Z-200 (saponification degree: 98), manufactured by The Nippon Synthetic Chemical Industry Co., Ltd.
A-6: GOHSENOL™ KL-05 (saponification degree: 80), manufactured by The Nippon Synthetic Chemical Industry Co., Ltd.
A-7: GOHSENX™ T-330H (saponification degree: 99, anionically modified product having a carboxyl group in the molecule), manufactured by The Nippon Synthetic Chemical Industry Co., Ltd.

### <Preparation of Resin Compositions>

The aqueous polyvinyl alcohol solutions prepared above, the aqueous polyester solutions B-1 to B-6 and B'-1 to B'-3 shown in Tables 1 to 8 below, and the cross-linking agents C-1 to C-6 shown in Tables 6 to 8 below were mixed in accordance with the respective formulations in Tables 1 to 8 below, stirred at room temperature for 1 hour, and then filtered through a 1-µm filter, whereby resin compositions of Examples and Comparative Examples were each obtained.

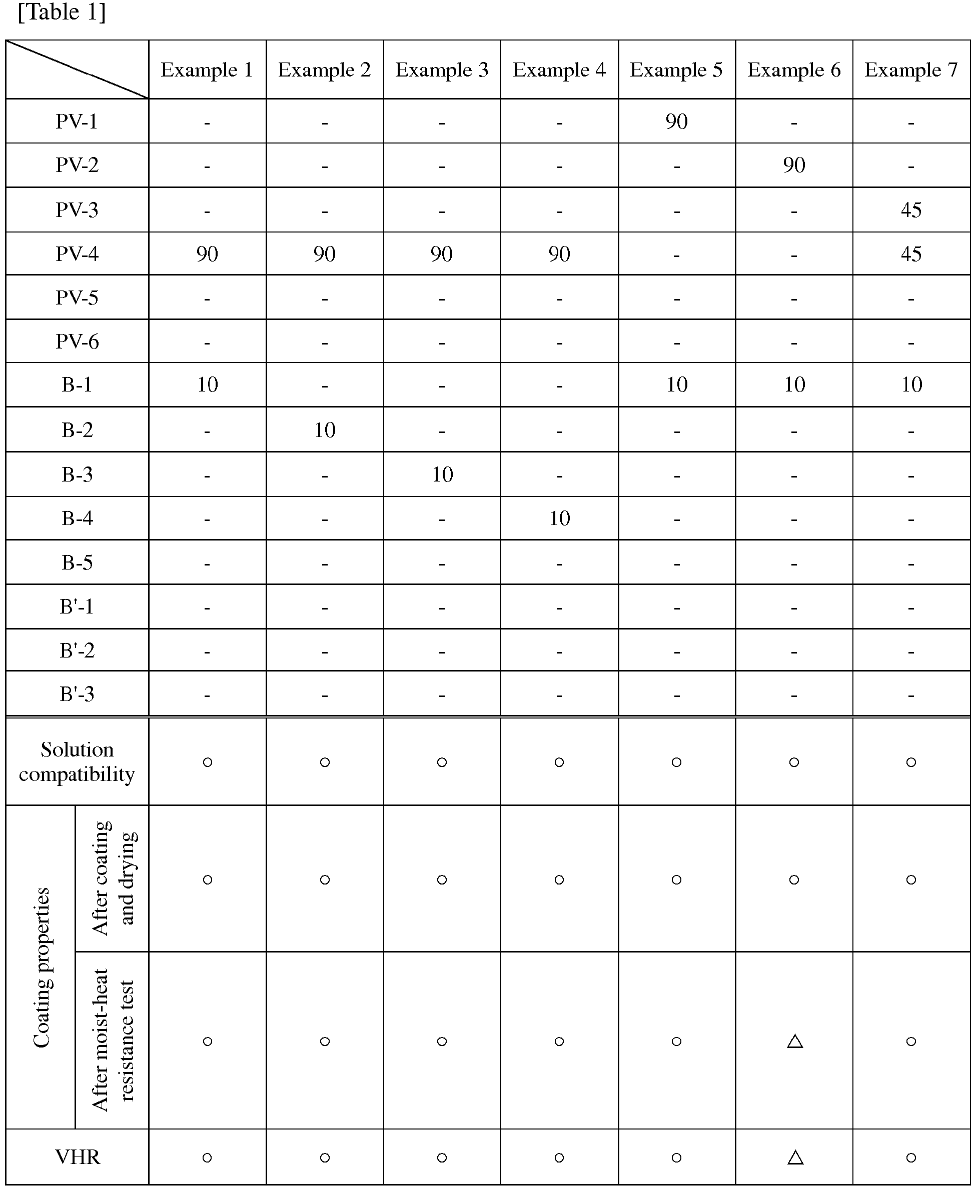

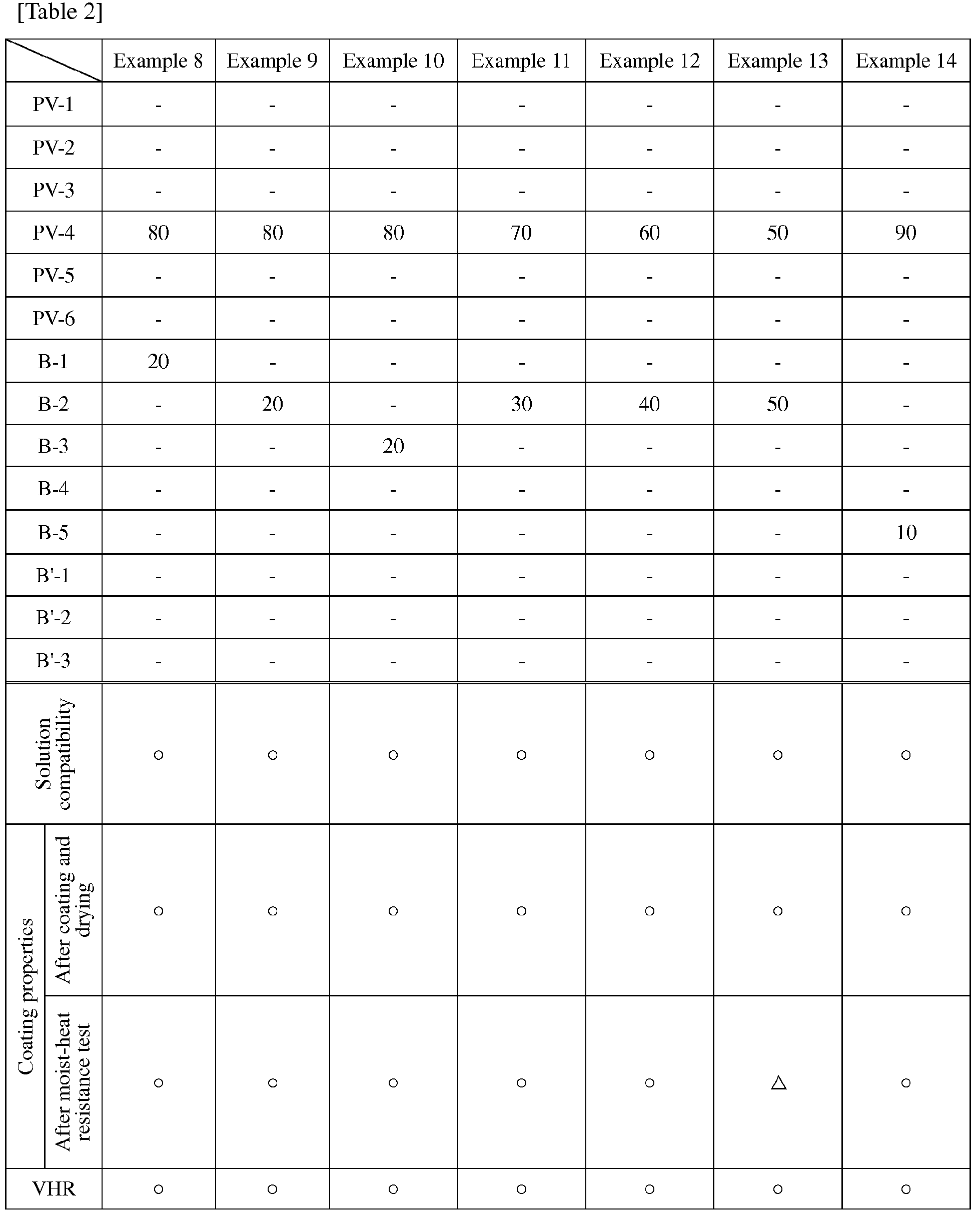

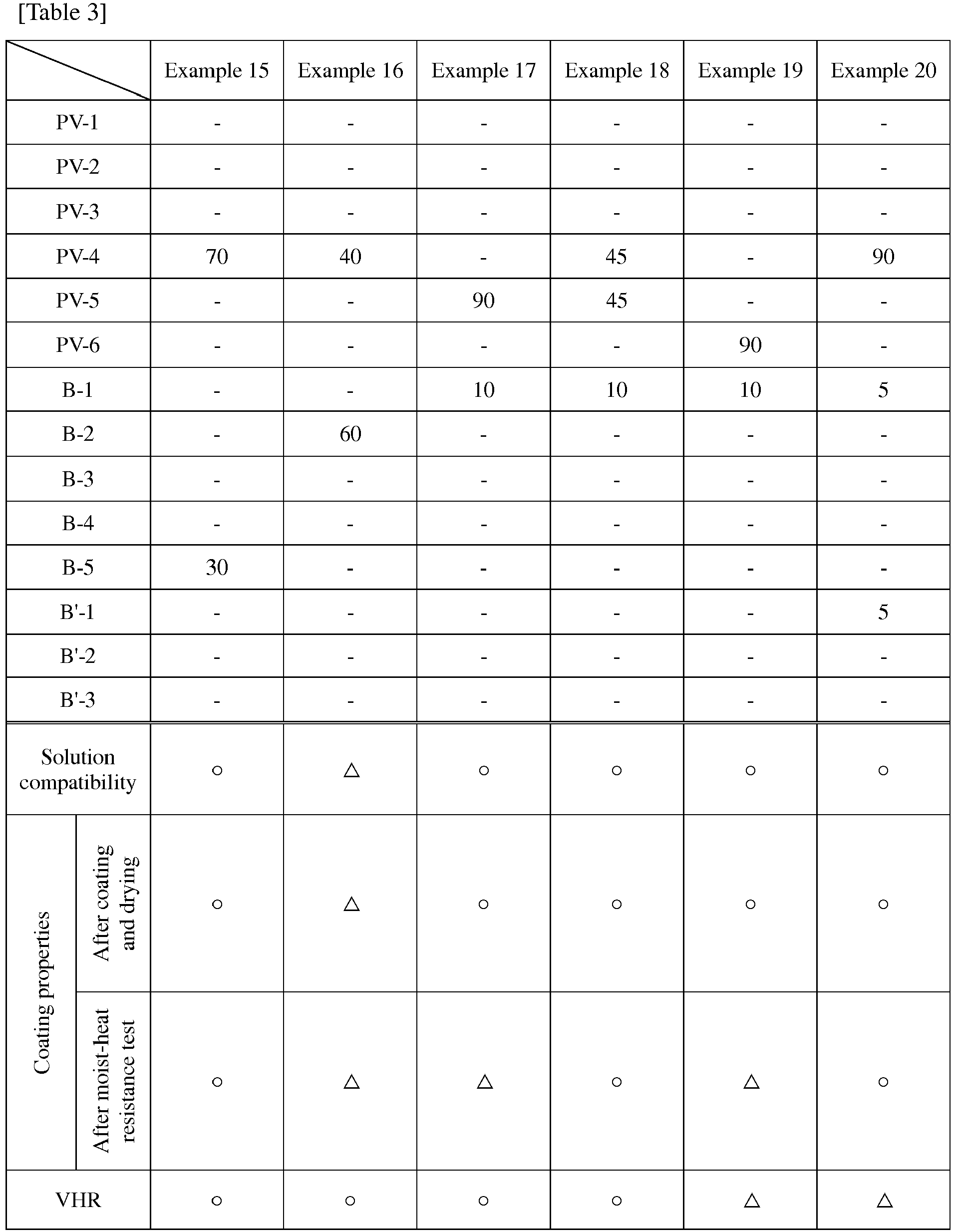

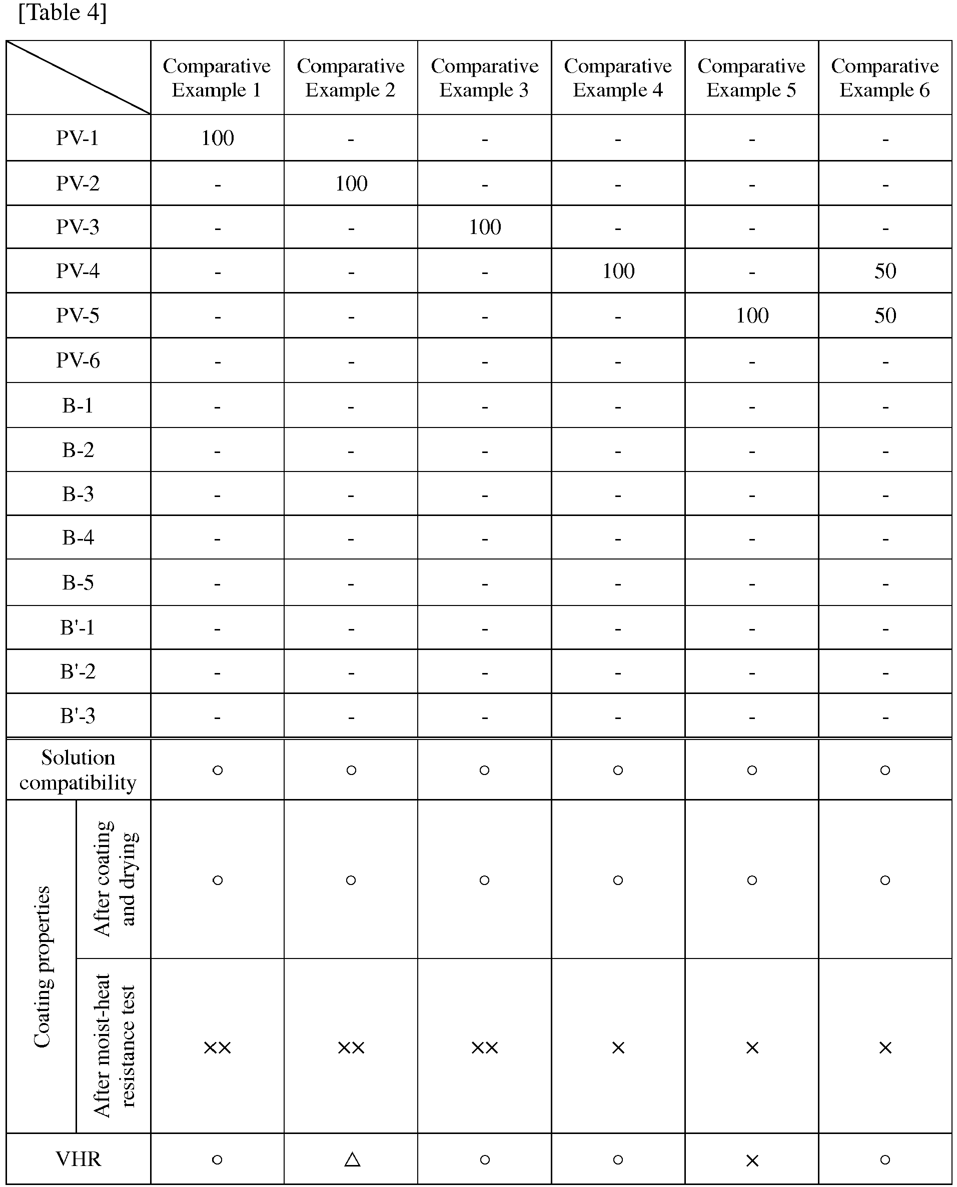

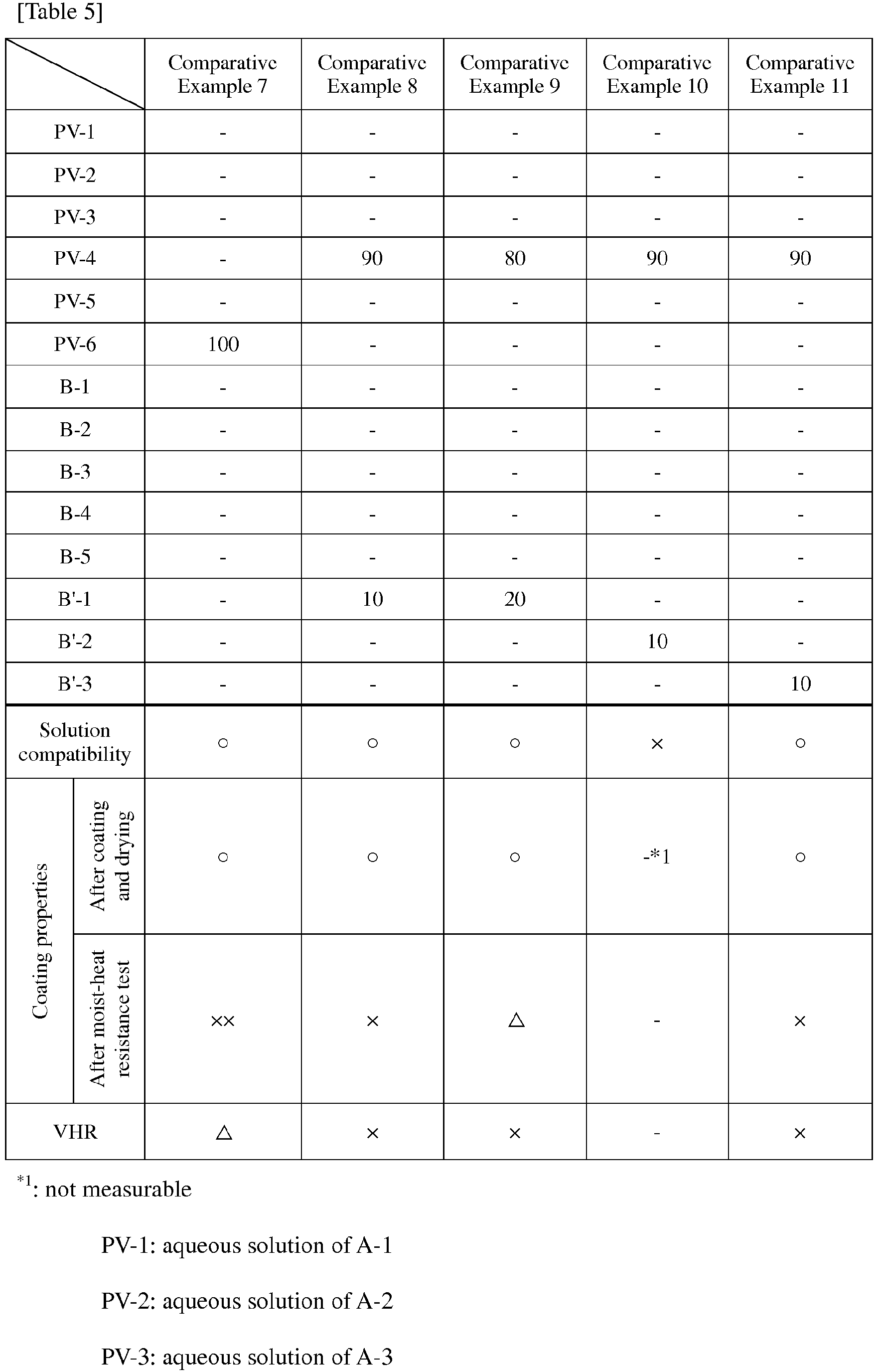

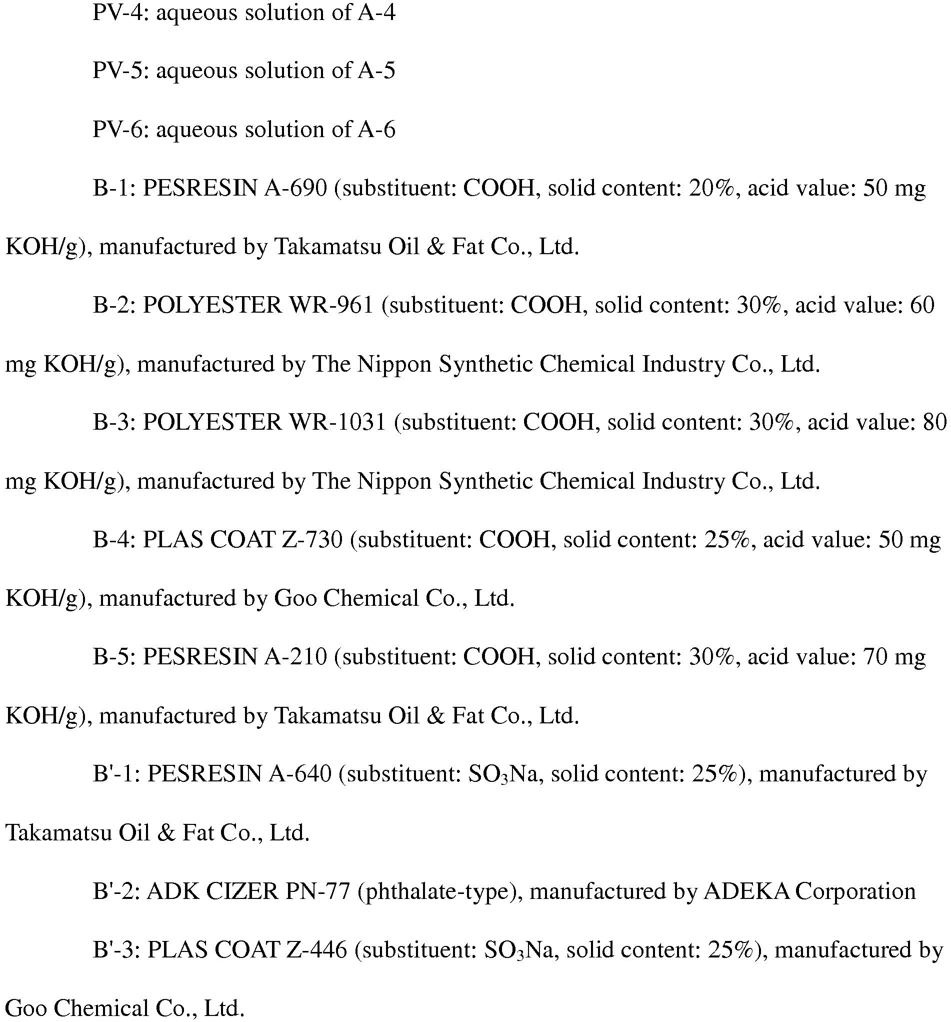

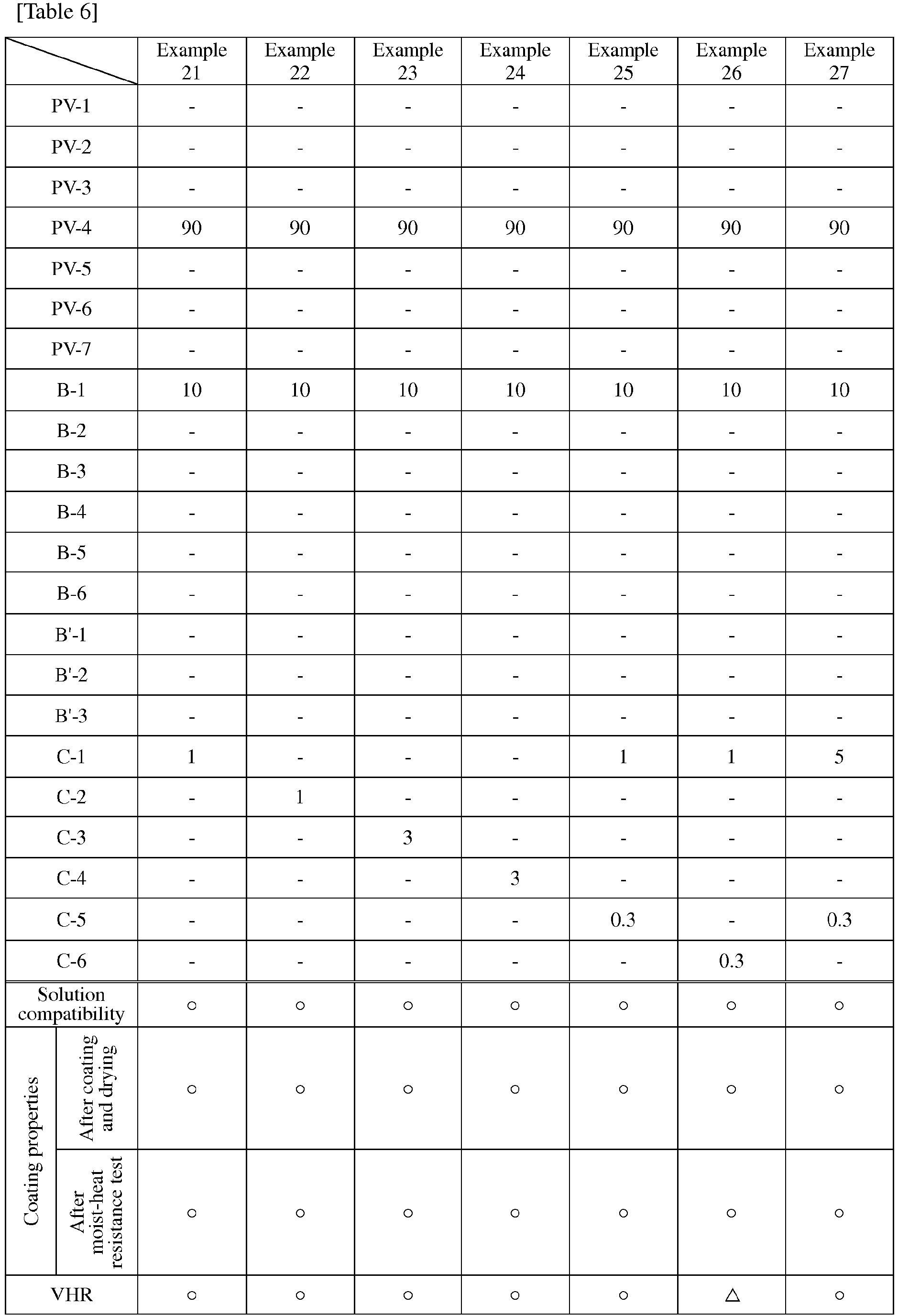

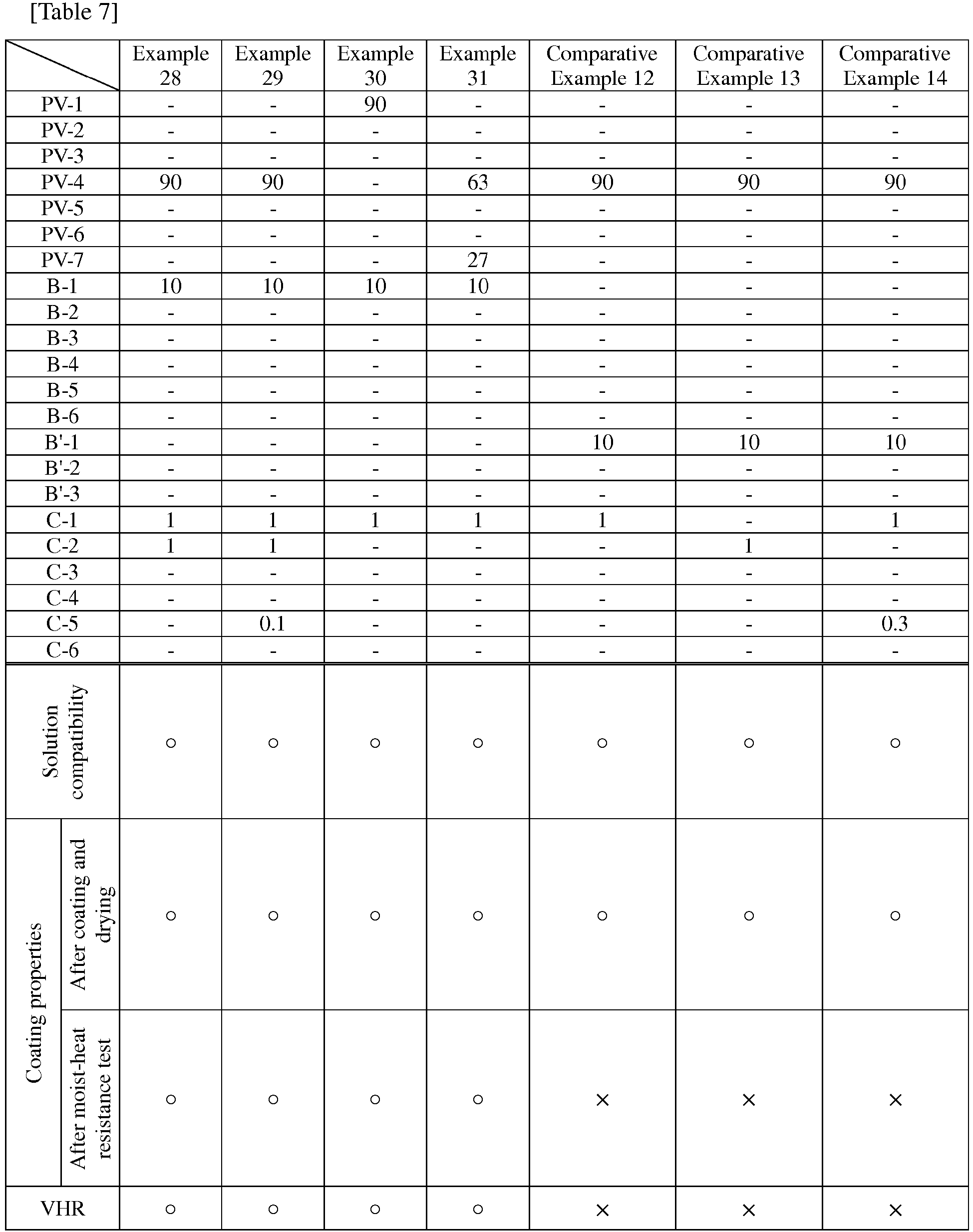

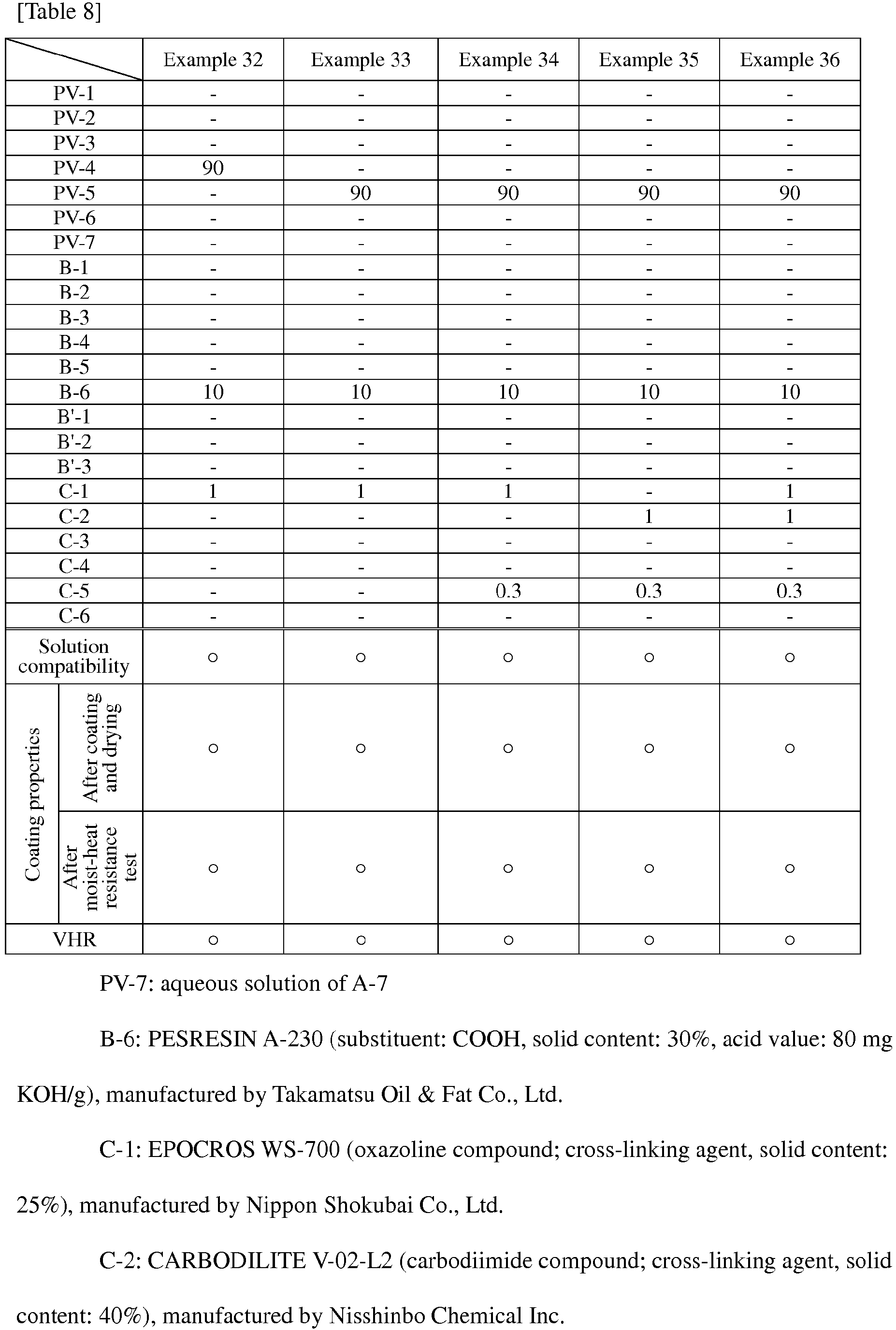

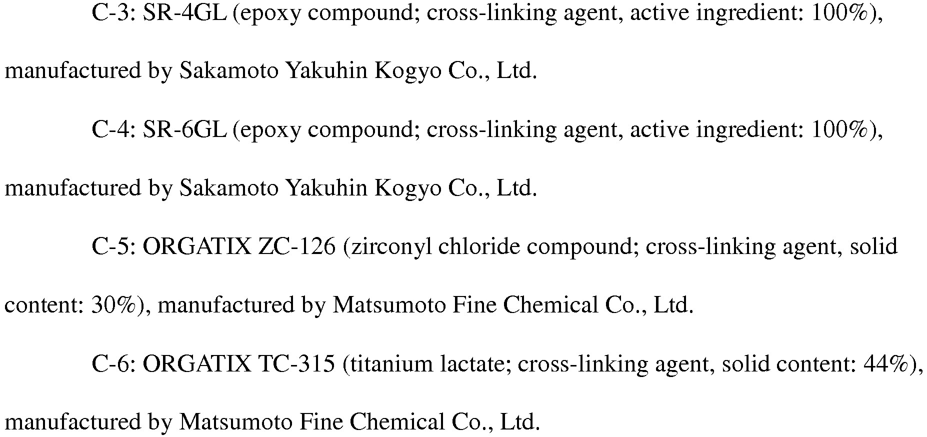

For each of the thus obtained resin compositions, the state after coating and drying, the state after a moist-heat resistance test, and the voltage holding ratio (VHR) were evaluated as solution compatibility and coating properties. The results thereof are shown in Tables 1 to 8 above. The evaluation procedures were as follows.

### (Solution Compatibility)

The state of each resin composition was visually checked. The evaluation criteria were as follows.
○: transparent and uniform
Δ: cloudy
×: not miscible (phase separation)

### (Coating Properties)

Each resin composition was coated on a glass substrate using a spin coater, and the resultant was prebaked on a 70°C hot plate for 5 minutes and then on a 90°C hot plate for 5 minutes, followed by 15-minute heating at 140°C, whereby an evaluation substrate was prepared. The spin-coating conditions were adjusted such that the resulting film thickness was measured to be 5.0 to 5.5 µm by a stylus method.

### a) State of Coating Film after Coating and Drying

For the thus obtained evaluation substrate, the surface state was visually checked and, at the same time, evaluated by haze measurement. For the measurement, a haze meter NDH5000 manufactured by Nippon Denshoku Industries Co., Ltd. was used, and the evaluation criteria were as follows.
○: The film was uniform, and the haze was less than 1.
Δ: The film was uniform, and the haze was 1 to less than 3
×: The film remained on the entire surface, and the haze was 3 or higher.
××: The film was partially delaminated or eluted.

### b) Moist-Heat Resistance Test of Coating Film

After leaving the thus obtained evaluation substrate to stand for 100 hours under the conditions of 85°C and 85% RH, the surface state of the substrate was evaluated in the same manner as in the above a). The evaluation criteria were also the same as described above. (VHR)

Liquid-crystal compositions composed of the liquid-crystal compounds No. 1 to No. 11 shown below were each brought into contact with the respective coating films obtained in the coating property test and, after leaving the resultants at 60°C for 60 hours, the liquid-crystal compositions were each removed, whereby a resin elution test was performed. For the thus removed liquid-crystal compositions, the VHR was compared before and after the resin elution test to determine the VHR reduction rate, which was evaluated based on the below-described criteria.

The liquid-crystal compositions were each injected into a TN cell for liquid crystal evaluation (cell thickness: 5 µm, electrode area: 8 mm × 8 mm, alignment film: JALS2096), and the VHR was measured using VHR-1A (manufactured by TOYO Corporation). The measurement conditions were set as follows: pulse voltage width = 60 µs, frame period = 16.7 ms, amplitude = ± 5V, and measuring temperature = 25°C.
○: VHR was higher than 99%.
Δ: VHR was 97 to 99%.
×: VHR was lower than 97%.

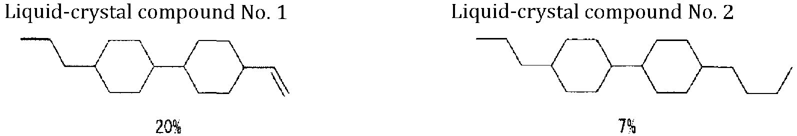

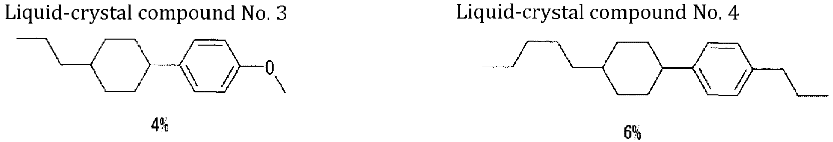

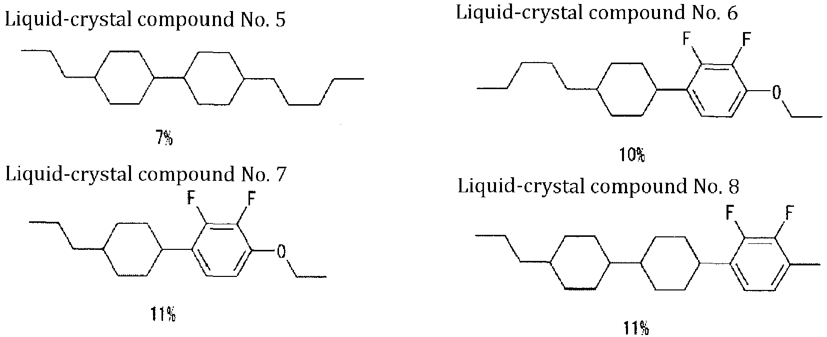

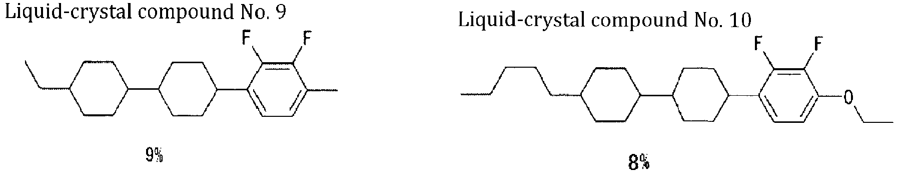

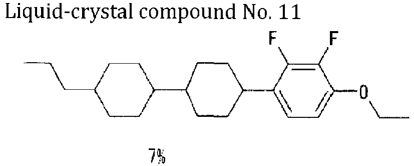

From Tables 1 to 8, it is seen that the resin compositions according to the present invention had excellent transparency and coating properties and exhibited low liquid crystal contamination. Therefore, the resin compositions according to the present invention can be suitably used in optical films and sealing agents for liquid-crystal dropping method.

## Claims

1. A resin composition comprising:
a polyvinyl alcohol; and
a polyester,
wherein said polyester comprises a carboxyl group and/or a carboxyl group salt as a substituent(s).

2. The resin composition according to claim 1, wherein said polyvinyl alcohol is a homopolymer or a copolymer containing a vinyl alcohol as an essential monomer.

3. The resin composition according to claim 1, wherein said polyvinyl alcohol comprises an acetoacetate group.

4. The resin composition according to claim 1, wherein said polyvinyl alcohol has a saponification degree of 85 or higher.

5. The resin composition according to claim 1, wherein the content of said polyester is 0.5 to 50% by mass in the solid content.

6. The resin composition according to claim 1, further comprising a cross-linking agent.

7. The resin composition according to claim 6, wherein said cross-linking agent is an oxazoline compound or a carbodiimide compound.

8. An optical film comprising the resin composition according to claim 1.
